# EUROPEAN PATENT APPLICATION

(11) **EP 3 246 723 A1**
(43) Date of publication of application: **22.11.2017**
(21) Application number: 16170270.9
(22) Date of filing: 19.05.2016
(51) Int. Cl.: G01S 5/02

(54) **METHOD FOR SETTING UP A POSITIONING SYSTEM**

(71) Applicant: Sony Mobile Communications Inc, Tokyo 140-0002 (JP)
(72) Inventor: KARLSSON, Fredrik, 214 39 Malmö (SE)
(74) Representative: Awapatent AB

(57) **Abstract**

The disclosure relates to a method for setting up a positioning system, the positioning system comprising a plurality of stationary communication devices (10, 11, 12), the method comprising
moving a mobile communication device (1) in relation to a stationary communication device (12) of the positioning system,
tracking the motion of the mobile communication device (1) and defining within the motion (20) a plurality of locations (x₁, y₁, z₁; x₂, y₂, z₂ and x₃, y₃, z₃),
receiving in the mobile communication device a signal (31, 32, 33) from the stationary communication device, the signal including an identifier of the stationary communication device,
measuring in the mobile communication device physical properties of the signal, the physical properties being dependent upon a relative position of the mobile communication device to the stationary communication device, the measuring being performed during the tracking for a plurality of locations of the mobile communication device,
calculating the position (X_{c}, Y_{c}, Z_{c}) of the stationary communication device based on the measured physical properties at the plurality of locations of the mobile communication device.

## Description

### Field of invention

The inventions relates to a method for setting up a positioning system, the positioning system comprising a plurality of stationary communication devices adapted to communicate with a mobile communication device whereby a position of the mobile communication device may be determined.

### Technical Background

Traditionally setup of an indoor positioning system consists of either placing beacons with a known identifier at a known location or collecting measurements from unknown beacons at a known location of the mobile phone performing the measurements (sometimes referred to as fingerprinting).

Placing positioning beacons with a known identifier at a known location is time consuming and error prone. A specific beacon with a specific id must be mapped to a precise location.

Moreover, to provide accurate positioning the beacons need to be accurately positioned at their intended position to provide the desired geometry of the positioning system. Thus, a skilled labourer is needed when the beacons are given their location as a specific geometry is required to provide accurate positioning of the mobile communication system.

The method of collecting radio frequency fingerprints from unknown beacons is faster than placing dedicated beacons, but the method is not robust in regards to changes in the environment. A new wall or even a new desk, or more people, will change the radio frequency environment, and the accuracy of the positioning will suffer.

It is also known to use dead reckoning to determine the position of a mobile phone. This is e.g. disclosed in the article "Vector Graph Assisted Pedestrian Dead Reckoning Using an Unconstrained Smartphone"; ISSN 1424-8220; www.mdpi.com/journal/sensors. However, dead reckoning lacks in positioning accuracy compared to a correctly installed positioning system using beacons.

### Summary of invention

It is an object of the invention to provide a new method for setting up a positioning system. The method is aimed at facilitate the setting up of the positioning system by making it easier and more flexible to set up a positioning system.

This object has been achieved by a method for setting up a positioning system, the positioning system comprising a plurality of stationary communication devices, the method comprising
moving a mobile communication device in relation to a stationary communication device of the positioning system,
tracking the motion of the mobile communication device and defining within the motion a plurality of locations,
receiving in the mobile communication device a signal from the stationary communication device, the signal including an identifier of the stationary communication device,
measuring in the mobile communication device physical properties of the signal, the physical properties being dependent upon a relative position of the mobile communication device to the stationary communication device, the measuring being performed during the tracking for a plurality of locations of the mobile communication device,
calculating the position of the stationary communication device based on the measured physical properties at the plurality of locations of the mobile communication device.

The plurality of stationary communication devices would be installed in an environment in advance of the setting up procedure.

By moving the mobile communication device and tracking the motion, it is possible to define a plurality of positions of the mobile communication device. Moving the mobile communication device is e.g. accomplished by the installer walking around in the environment in which the positioning system is intended to later on provide positioning of mobile communication devices.

By measuring physical properties of the signal at a plurality of locations of the mobile communication device it is possible to calculate the position of the stationary communication device. Different measured values of the different properties associated with different locations of the mobile communication device may be used to calculate a probable location of the stationary communication device. Typically the accuracy of the probable location relative to the actual position will increase with increasing number of locations at which the physical properties of the signal is measured. With the signal including an identifier, it is possible to in a simple manner pair the identifier with the calculated position.

The tracking of the motion may be performed in a number of different manners; separately or in combination with each other. If an additional stationary communication device is added to a previously installed and already set-up positioning system, the positioning data of the already installed positioning system may be used to define the locations of the mobile communication device. If a new positioning system is to be set-up e.g. a dead reckoning localization technique may be employed. Also, base stations in a terrestrial wireless communications system may act as beacons by transmitting signals of known power.

With the above mentioned method of setting up the positioning system, there is no need to keep track of their specific identifiers and there is neither any need to keep track of their exact location nor any need to position them exactly on a predetermined intended position. The stationary communication devices are simply installed at different locations and then by moving a mobile communication device in the environment will by the application of the method above result in that the stationary communication devices are identified and their position is calculated. Thus, instead of being forced to be install the stationary communication devices with great precision, the method will calculate where the stationary communication devices actually was located by the installer.

Moreover, if the installer identifies that it is difficult to install a stationary communication device at a previously specified intended position it is easy for the installer to simply install the stationary communication device close by where it is easy to install the stationary communication device. This is e.g. the case where other kinds of equipment is already installed but not marked on a map.

The method also makes it easy to add or move specific stationary communication devices. After the new stationary communication device has been installed or the old has been moved, the method may once again be used to calculate the position and pair it with the identifier.

Preferred embodiments appear in the dependent claims and in the description.

The physical properties of the signal may include signal strength, angle of arrival, time of arrival, time difference or arrival or round trip time. It may be noted that it is not necessary that all these properties are measured. It may also be noted that also other physical properties may be measured. The physical properties above are suitable examples of properties being dependent upon a relative position of the mobile communication device to the stationary communication device.

The tracking of the motion of the mobile communication device may comprise determining an initial location of the mobile communication device and tracking the motion using dead reckoning localization technique. This is a suitable manner since it may be used in environments where there is no positioning system present. Sometimes it is possible to use an already present positioning system to determine the initial position and thereafter a dead reckoning localization technique is used to track the motion. As mentioned above, the dead reckoning localization technique may be complemented with information from a positioning system whenever such information is available. That is, during the tracking of the motion using dead reckoning localization technique the location of the mobile communication device may be corrected now and then whenever positioning information is available.

Dead reckoning (DR), which may be also referred to as deduced reckoning, may in short be explained as a method for calculating a current location by using a previously determined location, or fixed location, and incrementing that location based upon known or estimated speed, elapsed time and direction.

The method of dead reckoning may, moreover, be referred to as pedestrian dead reckoning (PDR) in which the location of a mobile communication device carried by a user is determined. A built-in accelerometer of a mobile communication device may for example be used as a pedometer and built-in magnetometer as a compass heading provider. Hence, PDR may be used to track the motion of the mobile communication device and thereby supplement other navigation methods such as GPS, where such navigation systems are inaccurate or unavailable.

In a simple implementation, the user holds their phone in front of them and each step causes position to move forward a fixed distance in the direction measured by the compass of the mobile communication device.

For this purpose an accelerometer of the mobile communication device may be used to determine harmonic oscillation waveforms that result from walking behaviors of the user. Hence, it may be determined if the user is walking, running or standing still. The dead reckoning location technique may e.g. use step detection, step length estimation, and heading determination of the user of the mobile communication device.

Typically, the accelerometer measurements are utilized to implement step detection and step length estimation, and heading determination is simultaneously completed by fusing the information from gyroscopes, accelerometers, and magnetometers.

The tracking may further involve use of map matching to constrain the dead reckoning localization technique. This way the dead reckoning localization technique may be improved e.g. by correcting for drift. The dead reckoning localization technique may e.g. indicate trajectory or a straight line motion and indicate a specific direction. However, due to drift, the straight line motion from the dead reckoning localization technique may indicate a location which would translate to the mobile communication device cutting through a comer in a corridor or moving over a screen or a desk in an office space. With the use of map matching, such as by application of a so-called particle filter, to constrain the dead reckoning localization technique, the defined locations may be corrected to more accurately correspond to the actual location of the mobile communication device.

Thus, the map information may thereby be used to improve the tracking by correcting for example sensor drifts and improve the localization accuracy by revising the errors introduced in step length estimation and heading determination.

The dead reckoning localization technique may involve data from built-in sensors of the mobile communication device, wherein the sensors preferably include accelerometer, gyroscope, magnetometer and barometer. It may be noted that it is not necessary that all these sensors are used. It may also be noted that also other sensors may be used. The sensors above are suitable examples of sensors being affected by movement of the mobile communication device. It may also be noted that the above sensors or other sensors may be distributed and/or duplicated in more than one mobile communication device. It is e.g. conceivable that sensors are provided in a mobile phone and in a smart watch, and that information from both devices is used as input in the dead reckoning localization technique.

The method may further comprise determination of an intended position of a stationary communication device. The intended positions of the stationary communication devices may e.g. geolocated in advance on a map of the environment which is to be provided with a positioning system. As mentioned before there is no need to keep track of their specific identifiers. Preferably this should be done by a algorithm, but could also be done by a person familiar with setting up indoor positioning systems.

The method may further comprise positioning a stationary communication device at an actual position, preferably at a previously determined intended position.

The stationary communication device may be selected from the group comprising, preferably consisting of, a beacon, such as a WLAN beacon, Zigbee beacon, Wifi beacon, Bluetooth beacon, low energy Bluetooth beacon, Infrared beacon, ultrasound beacon, or RFID beacon, or a cellular network station.

The mobile communication device may be a mobile phone.

### Brief description of the drawings

The invention will by way of example be described in more detail with reference to the appended schematic drawings, which shows a presently preferred embodiment of the invention.
Figure 1 is an overview of an office space in which a positioning system is to be installed and set-up.
Figure 2 schematically indicates the steps of a method for setting up a positioning system.
Figure 3 schematically depicts a mobile communication device.

### Detailed description of preferred embodiments

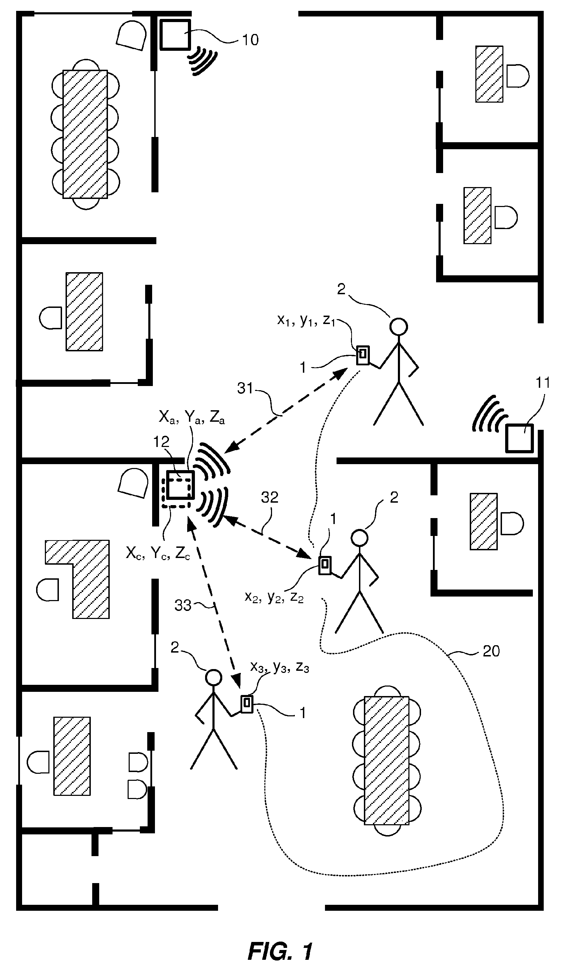

In figure 1, there is shown a positioning system comprising three stationary communication devices 10, 11, 12 installed in an office space. In figure 1, it is exemplified how the mobile communication device 1 is moved and communicates with the stationary communication device 12 for setting up the stationary communication device 12 in the positioning system. The stationary communication devices 10 and 11 may be set-up in the same manner simultaneously or in sequence with the setting-up of the stationary communication device 12. Alternatively, the stationary communication devices 10 and 11 may have been set-up at an earlier point in time and may be used as part of the setting up of the stationary communication device 12. The plurality of stationary communication devices 11, 12, 13 would be installed in an environment in advance of the setting up procedure. Suitable positions of the stationary communication devices 10, 11, 12 have been determined before the installation. The intended positions of the stationary communication devices 11, 12, 13 may e.g. geolocated in advance on a map of the environment which is to be provided with a positioning system. Preferably this should be done by a algorithm, but could also be done by a person familiar with setting up indoor positioning systems. The actual position at which the stationary communication device 12 has been installed is indicated with Xₐ, Yₐ, Zₐ. It may at this point be noted that this actual position Xₐ, Yₐ, Zₐ may be different from the intended one, e.g. due to a mistake by the installer or due to difficulty to physically install the stationary communication device 12 at the intended position.

The setting up method may work as follows;

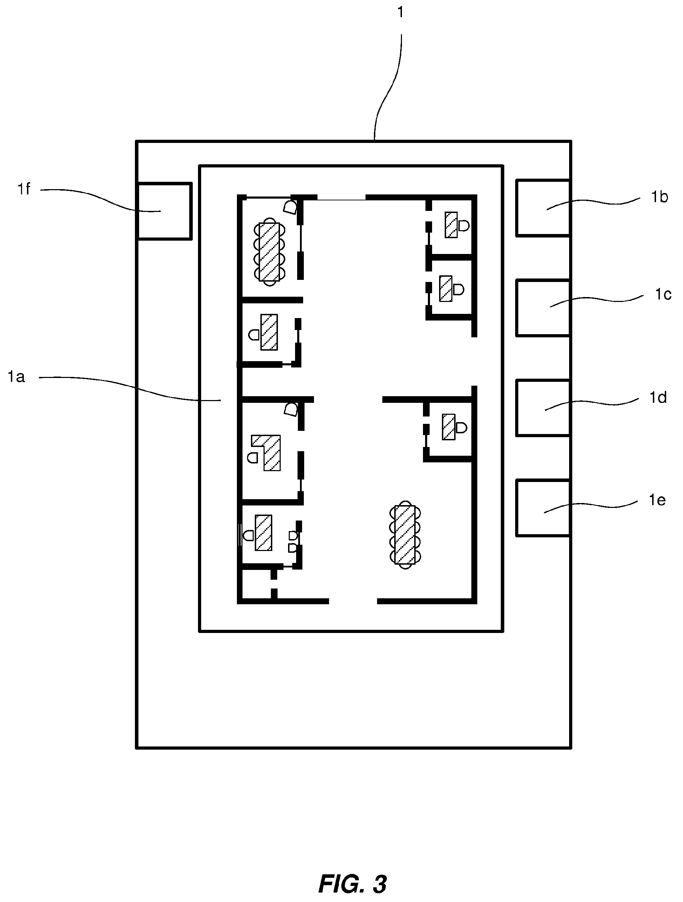

Initially, the initial location (x₁, y₁, z₁) of the mobile communication device 1, which in this example is a mobile phone 1, is determined. This may e.g. be performed using already present positioning system. Alternatively, the user 2 may indicate the position on an interactive map displayed on the display 1a of the mobile phone 1 (see figure 3).

Thereafter, the user 2 will walk around in the office space and thereby move the mobile phone 1. The movement of the mobile phone 1 in the office space will thereby result in a movement of the mobile communication device 1 in relation to the stationary communication device 12. The motion of the mobile phone 1 is tracked using dead reckoning localization technique. The dead reckoning localization technique involves data from built-in sensors of the mobile phone 1. The sensors include accelerometer 1b, gyroscope 1c, magnetometer 1d and barometer 1e. The determined motion is indicated by the dotted line 20.

During the tracking of the motion of the mobile communication a plurality of locations x₁, y₁, z₁; x₂, y₂, z₂ and x₃, y₃, z₃ will be defined within the motion 20.

The mobile phone 1 will receive a signal 31, 32, 33 from the stationary communication device 12. The signal 31, 32, 33 includes an identifier of the stationary communication device 12.

For a plurality of locations of the mobile phone 1, the mobile phone 1 will e.g. using the antenna If measure physical properties of the signal 31, 32, 33. The physical properties of the signal may include signal strength, angle of arrival, time of arrival, time difference or arrival or round trip time. It may be noted that it is not necessary that all these properties are measured. It may also be noted that also other physical properties may be measured. The physical properties above are suitable examples of properties being dependent upon a relative position of the mobile communication device to the stationary communication device. The trigger point for performing a measurement and for defining a location may be trigged by the motion tracking and/or by the measurement of the physical properties and/or by another entity, such as time. The motion tracking may e.g. trigger the measurement of the physical properties if the motion tracking determines that a significant movement has been detected and/or that the location of the mobile phone 1 is considered to be especially accurate. The measurement of the physical properties may e.g. trigger the definition of the location if the measurement is determined to have undergone a significant change.

Based on the measured physical properties at the plurality of locations x₁, y₁, z₁; x₂, y₂, z₂ and x₃, y₃, z₃ of the mobile phone 1, the position X_{c}, Y_{c}, Z_{c} of the stationary communication device 12 is calculated. Also the calculated position is associated with the received identifier.

With this method the data concerning position and identifier necessary for the later use of the stationary communication devices as part of a positioning system has been retrieved. The actual use of the data in a positioning system is well-known to a person skilled in the art and will not be discussed in this disclosure.

The stationary communication device may be selected from the group comprising, preferably consisting of, a beacon, such as a WLAN beacon, Zigbee beacon, Wifi beacon, Bluetooth beacon, low energy Bluetooth beacon, Infrared beacon, ultrasound beacon, or RFID beacon, or a cellular network station.

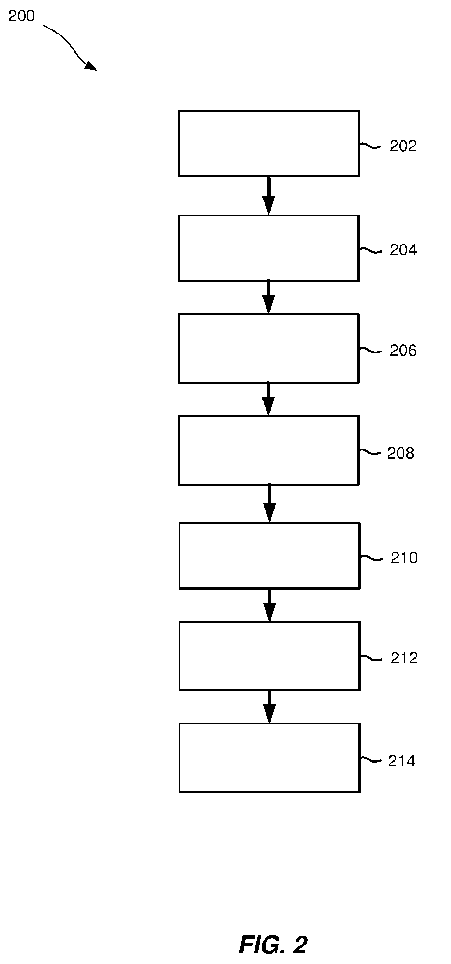

The installation and setting up 200 of a positioning system includes, with reference to figure 2, in short the following actions.

The stationary communication devices 10, 11, 12 are installed 202 in an office space.

The initial position x₁, y₁, z₁ of the mobile communication device 1 is determined 204.

The mobile communication device 1 is moved 206 in relation to the stationary communication device 12.

During the motion of the mobile communication device 1, the mobile communication device 1 registers 208 data from sensors, preferably from built-in sensors, including accelerometer 1b, gyroscope 1c, magnetometer 1d and barometer 1e.

The data registered 208 from the sensors is used to perform a dead reckoning localization technique and the motion of the mobile communication device 1 is tracked 210.

During the tracking of the motion of the mobile communication device 1 a plurality of locations x₁, y₁, z₁; x₂, y₂, z₂ and x₃, y₃, z₃ will be defined 210 within the motion 20.

During the movement the mobile communication 1 will receive 212 a signal 31, 32, 33 from the stationary communication device 12. The signal 31, 32, 33 includes an identifier of the stationary communication device 12. For the plurality of locations x₁, y₁, z₁; x₂, y₂, z₂ and x₁, y₃, z₃ of the mobile communication device 1, the mobile communication device 1 will e.g. using the antenna If measure physical properties of the signal 31, 32, 33.

Based on the measured physical properties at the plurality of locations x₁, y₁, z₁; x₂, y₂, z₂ and x₁, y₃, z₃ of the mobile communication device 1, the position X_{c}, Y_{c}, Z_{c} of the stationary communication device 12 is calculated 214.

The calculated position X_{c}, Y_{c}, Z_{c} of the stationary communication device 12 is associated with the identifier received from the stationary communication device 12.

It is contemplated that there are numerous modifications of the embodiments described herein, which are still within the scope of the invention as defined by the appended claims.

In the above, the setting up has been disclosed in relation to an initial setting up of a positioning system. However, the method also may be used after adding or moving a specific stationary communication device. After the new stationary communication device has been installed or the old has been moved, the method may once again be used to calculate the position and pair it with the identifier.

## Claims

1. Method for setting up a positioning system, the positioning system comprising a plurality of stationary communication devices (10, 11, 12), the method comprising
moving a mobile communication device (1) in relation to a stationary communication device (12) of the positioning system,
tracking the motion of the mobile communication device (1) and defining within the motion (20) a plurality of locations (x₁, y₁, z₁; x₂, y₂, z₂ and x₃, y₃, z₃),
receiving in the mobile communication device (1) a signal (31, 32, 33) from the stationary communication device (12), the signal (31, 32, 33) including an identifier of the stationary communication device (12),
measuring in the mobile communication device (1) physical properties of the signal (31, 32, 33), the physical properties being dependent upon a relative position of the mobile communication device (1) to the stationary communication device (12), the measuring being performed during the tracking for a plurality of locations of the mobile communication device (x₁, y₁, z₁; x₂, y₂, z₂ and x₃, y₃, z₃),
calculating the position (X_{c}, Y_{c}, Z_{c})of the stationary communication device (12) based on the measured physical properties at the plurality of locations (x₁, y₁, z₁; x₂, y₂, z₂ and x₃, y₃, z₃) of the mobile communication device (1).

2. Method according to claim 1, wherein the physical properties of the signal includes signal strength, angle of arrival, time of arrival, time difference or arrival or round trip time.

3. Method according to claim 1 or 2, wherein tracking the motion of the mobile communication device (1) comprises determining an initial location (x₁, y₁, z₁) of the mobile communication device (1) and tracking the motion (20) using dead reckoning localization technique.

4. Method according to claim 3, wherein the tracking involves use of map matching to constrain the dead reckoning localization technique.

5. Method according to claim 3 or 4, wherein the dead reckoning localization technique involves data from built-in sensors (1b-e) of the mobile communication device (1), wherein the sensors (1b-e) include accelerometer, gyroscope, magnetometer and barometer.

6. Method according to any one of claims 1-5, further comprising determination of an intended position of a stationary communication device (12).

7. Method according to any one of claims 1-6, the method further comprising positioning a stationary communication device at an actual position (Xₐ, Yₐ, Zₐ) preferably at a previously determined intended position.

8. Method according to any one of claims 1-7, wherein the stationary communication device is selected from the group comprising, preferably consisting of, a beacon, such as a WLAN beacon, Zigbee beacon, Wifi beacon, Bluetooth beacon, low energy Bluetooth beacon, Infrared beacon, ultrasound beacon, or RFID beacon, or a cellular network station.

9. Method according to any one of claims 1-8, wherein the mobile communication device is a mobile phone.
